# EUROPEAN PATENT SPECIFICATION

(11) **EP 2 175 687 B1**
(45) Date of publication and mention of the grant of the patent: **25.01.2017**
(21) Application number: 07845933.6
(22) Date of filing: 14.12.2007
(51) Int. Cl.: H04W 84/00, H04L 29/06, H04L 29/08, H04N 7/16, H04N 7/173, H04N 21/262, H04N 21/458, H04N 21/61, H04N 21/658, H04N 21/84

(54) **SYSTEM AND METHOD FOR UPDATING DIFFERENCE OF ELECTRONIC SERVICE GUIDE**
SYSTEM UND VERFAHREN ZUR DIFFERENZ-AKTUALISIERUNG BEI EINEM ELEKTRONISCHEN DIENSTE-FÜHRER
SYSTÈME ET PROCÉDÉ POUR ACTUALISER LES DIFFÉRENCES D'UN GUIDE ÉLECTRONIQUE DES SERVICES

(30) Priority: 20.09.2007 CN 200710153039
(43) Date of publication of application: 14.04.2010
(73) Proprietor: ZTE Corporation, Shenzhen, Guangdong 518057 (CN)
(72) Inventor: KE, Zunyou, Shenzhen Guangdong 518057 (CN)
(74) Representative: Haverkamp, Jens
(86) International application number: PCT/CN2007/003596
(87) International publication number: WO 2009/036624

(56) References cited:
- EP-A2- 1 816 766
- WO-A1-2004/056096
- WO-A1-2007/023337
- CN-A- 1 997 174
- CN-A- 101 001 386
- CN-A- 101 015 203
- CN-A- 101 022 626
- US-A1- 2005 022 237
- BO-SUN JUNG ET AL: "Clean up of Service Guide Functions & Flows ; OMA-BCAST-2005-0162R01-Clean-up-of-service -guide-function-and-flows-section", OMA-BCAST-2005-0162R01-CLEAN-UP-OF-SERVICE -GUIDE-FUNCTION-AND-FLOWS-SECTION, OPEN MOBILE ALLIANCE (OMA), 4330 LA JOLLA VILLAGE DR., SUITE 110 SAN DIEGO, CA 92122 ; USA , 6 April 2005 (2005-04-06), pages 1-7, XP064134453, Retrieved from the Internet: URL:ftp://Public_documents/BCAST/2005/ [retrieved on 2005-04-06]
- "Service Guide for Mobile Broadcast Services ; OMA-TS-BCAST_Service_Guide-V1_0_0-20070104 -D_clean", OMA-TS-BCAST_SERVICE_GUIDE-V1_0_0-20070104 -D_CLEAN, OPEN MOBILE ALLIANCE (OMA), 4330 LA JOLLA VILLAGE DR., SUITE 110 SAN DIEGO, CA 92122 ; USA , no. 1.0 4 January 2007 (2007-01-04), pages 1-200, XP064031921, Retrieved from the Internet: URL:ftp://Public_documents/BCAST/Permanent _documents/ [retrieved on 2007-01-04]

## Description

### TECHNICAL FIELD

The present invention relates to the field of a mobile multimedia broadcast technology, and more particularly relates to a system and method for updating an Electronic Service Guide (ESG) in the mobile multimedia broadcast technology.

### BACKGROUND

An Electronic Service Guide (ESG) or an electronic program guide is a kind of guide information of multimedia broadcast service information, and is a method for service providers to manage and distribute services, and is also a window for users to find and utilize services. According to ESG information, a user can learn relevant information of mobile multimedia broadcast services (including service name, broadcast time, content abstract, price, etc.), and can quickly search, preview and access the services. The ESG provides a good guide mechanism for a user to view television programs and enjoy information services, so that the user can find his/her favorable programs and look over the additional information of the programs conveniently and quickly. These functions of the ESG make a client terminal of the ESG an important way and tool for a user to view programs.

With the enriching information quantity of ESG, it has become an important task to effectively update ESG information of a terminal. Usually, ESG data information to be broadcast, namely ESG broadcast data, may be divided into several data blocks on demand. These data blocks may be classified according to ESG data types, including service information, layout information, program content information and service parameter information, etc.

An update operation of a terminal is performed according to obtainable changes of data block version numbers. During a period of time, because users may have different habits in using terminals, these ESG data blocks cached in each terminal have different version numbers. In another word, when it is necessary for a user terminal to update local ESG information, since the present data blocks of terminals have different version numbers, the update bases are different, and data required for accomplishing the update process are different. Therefore, each terminal needs to inform a network server its different update requirement. If simply a mobile multimedia unidirectional broadcast system is applied, the difference requirement of terminal updating cannot be satisfied economically. This will consequentially bring difficulty to the implementation of ESG data transmission and local ESG data information update of the terminal.

Therefore, it is necessary to provide a system and method for implementing difference update of a multimedia broadcast electronic service guide.

WO 2004/056096 A1 discloses an electronic service guide (ESG) by transmitting announcements describing multimedia sessions, such video streams. Sessions are organized into a session directory (28) which is split into two parts: a full session directory (291) and an updated session directory (292). A first kind of announcement describes all sessions in the full session directory. A second kind of announcement describes sessions in the updated session directory. Once a client has received a description of the full session directory, it need only listen to announcements of the second type so as to learn of any updates to sessions.

US 2005/0022237 A1 discloses that specific requirements for a protocol, which deal with a program guide describing meta-data of content. This protocol enables users and devices to select up-to-date and appropriate content out of a large number of unnecessary content. The protocol allows subscribers (having program guide receivers) to receive updates (from a program guide sender) to either an entire program guide or portion of a program guide, wherein the portion of program guide is defined according to a set of preferences and constraints. Communications between the program guide sender and the program guide receiver are accomplished using a protocol such as a session initiated protocol (SIP).

BO-SUN JUNG ET AL: "Clean up of Service Guide Functions & Flows; OMA-BCAST-2005-0162R01-Clean-up-of-service-guide-function-and-flows-se ction",OMA-BCAST-2005-0162R01-CLEAN-UP-OF-SERVICE-GUIDEFUNCTI ON- AND-FLOWS-SECTION, OPEN MOBILE ALLIANCE (OMA), 4330 LA JOLLA VILLAGE DR., SUITE 110 SAN DIEGO, CA 92122; USA, 6 April 2005 (2005-04-06) discloses that SG-C in terminal requests SG-G to transmit Service Guide over the interaction channel. SG-C receives SG through Interaction Channel. SG-C may filter SG based on user preference and user profile before it shows SG to a user.

### SUMMARY

The technical problem the present invention aims to solve is, by providing a system and method for difference update of an electronic service guide, to provide difference update content according to update requirements of different terminals in a mobile multimedia broadcast system.

The above technical problem is solved by a method according to the features of claim 1 and by a system with the features of claim 9.

Further, the step of generating difference update data according to the current ESG data information of the user terminal, may comprise: obtaining version numbers of data blocks to be updated of the terminal according to the current ESG data information of the user terminal, and comparing the version numbers of the data blocks to be updated with history version numbers of ESG data information stored in the ESG server, and generating the difference update data from those data blocks corresponding to changed history version numbers.

Further, in step (1), the user terminal may send the ESG difference update request to the ESG server through a mobile communication network, correspondingly, in step (2), the ESG server may return the difference update data to the user terminal through the mobile communication network.

Further, the current ESG data information of the user terminal may comprise: any piece of or combination of data type identifier information, data block identifier information and data block version number information.

Further, before step (1), the method may also comprise:
A: the user terminal compares local cached ESG data information with ESG data information received from a broadcast network, if the local cached ESG data information is different from that received from the broadcast network, it is determined that it is needed to initiate the ESG difference update request message; the local cached ESG data information is different from that received from the broadcast network in at least one aspect of data type identifier information, data block identifier information and data block version number information.

Further, in step (2), the ESG server may return the difference update data to the user terminal through an ESG difference response message, and the ESG difference response message may include any piece of or combination of data type identifier information, information of the total number of data blocks or data block description information.

Further, the data block description information may be any piece of or combination of data block identifier information, data block version number information and the difference update data; the difference update data includes document information which comprises ESG data information of one or more data blocks.

Further, if no version number of history versions of the data information stored in the ESG server is corresponding to the version numbers of the data blocks to be updated, then the ESG difference update data is generated from the data information of current version of the ESG server.

Further, before the step A, the method may also comprise:
step A0: after receiving an ESG broadcast request from a unidirectional broadcast network, the ESG server returns a response message and ESG data information to the unidirectional broadcast network, and the unidirectional broadcast network forwards the ESG data information to the user terminal.

To solve the above-mentioned technical problem, the present invention also provides a system for difference update of an electronic service guide, comprising an electronic service guide (ESG) server, a unidirectional broadcast network and a user terminal, and the system may further comprise a mobile communication network, the mobile communication network is used for receiving an ESG difference update request of the user terminal and for forwarding the request to the ESG server, and is further used for forwarding ESG difference update data returned by the ESG server that meet the update request to the user terminal.

Further, the user terminal may be used for comparing local ESG data with received ESG data in aspects of data type identifier information, data block identifier information and data block version number information, if there is any aspect different, the user terminal sends the ESG difference update request to the ESG server, and the ESG update request includes any piece of or combination of data type identifier information, data block identifier information or data block version number information.

Further, the ESG server may be used for comparing version numbers of received data blocks to be updated of the terminal with history version numbers of ESG data information stored in the ESG server, and generating difference update data from those data blocks corresponding to changed history version numbers, and sending the difference update data to the terminal through an ESG difference response message, the ESG difference response message includes any piece of or combination of data type identifier information, information of the total number of data blocks or data block description information, wherein the data block description information is any piece of or combination of data type identifier information, data block version number information and difference update data.

In existing technologies, difference update requirements of terminals can not be satisfied economically simply by applying a mobile multimedia unidirectional broadcast system. While in the method provided by the present invention for difference update of an electronic service guide in a mobile multimedia broadcast system, ESG information difference update is implemented by adopting a unidirectional broadcast network together with a mobile communication network in a mobile multimedia broadcast system, not only difference update is implemented, but also the number of data transmitted is greatly reduced and update efficiency is improved because it is only required to update data blocks of current version that have changes compared with those of history versions.

### BRIEF DESCRIPTION OF THE DRAWINGS

Fig. 1 is a diagram illustrating a network structure of a system for difference update in embodiments of the present invention;
Fig. 2 is a flowchart illustrating ESG difference update based on the system shown in Fig. 1;
Fig. 3 is a diagram illustrating a basic description table of mobile multimedia broadcast in embodiments of the present invention;
Fig. 4 is a diagram illustrating an ESG broadcast request message in embodiments of the present invention; and
Fig. 5 is a diagram illustrating an ESG broadcast response message in embodiments of the present invention.

### DETAILED DESCRIPTION

The technical scheme and implementation of the present invention will be illustrated in detail hereinafter with reference to the drawings.

The main idea of the present invention is that, after a user terminal initiates an ESG difference update request to an ESG server through a mobile communication network, the ESG server compares history versions of ESG data information stored in the ESG server with versions of data blocks to be updated that correspond to the terminal, generates ESG difference update data that meet the update request from the several data blocks corresponding to changed history versions, and returns the update data to the user terminal through the mobile communication network, and the user terminal updates local ESG data according to the ESG difference update data.

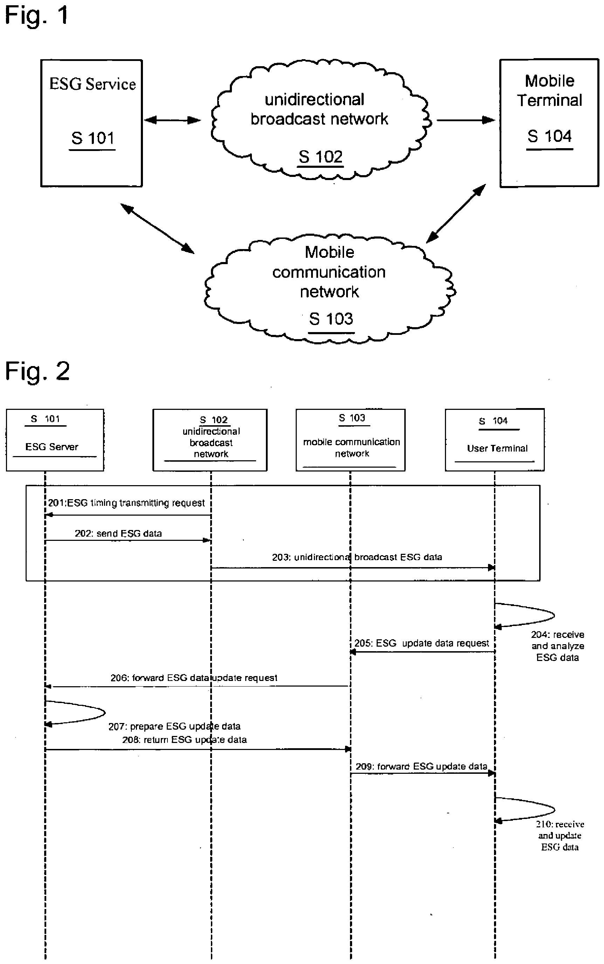

As shown in Fig. 1, it is a diagram illustrating a network structure of the present invention. The system integrates a mobile multimedia unidirectional broadcast network and a mobile communication network (such as GPRS or CDMA, etc.). The network shown in Fig. 1 comprises: an ESG server S101, a unidirectional broadcast network S102, a mobile communication network S103 and a mobile terminal S104; and each component is set forth as follows:
The ESG server S101, its function comprises:
   managing various ESG data information, system configuration data of ESG services and etc.; generating one or more data blocks for broadcast or difference update; according to specifications, encapsulating ESG data information; generating an ESG basic description table; sending the ESG data responding to a broadcast ESG data request; sending the ESG data responding to an ESG data information difference update request.

When dividing and identifying ESG data blocks, the ESG server divides ESG data information into multiple parts according to regulations, and establishes corresponding relationship between the ESG data information parts and data block identifiers. A data block is a subset of a set of elements with the same data type identifier. The ESG basic description table comprises version numbers and ESG service identifiers of the ESG data blocks; the basic description table comprises data type identifiers, data block identifiers and data block version numbers of each ESG, and can be indexed to find an ESG service identifier used by the data block, and thus can provide a prompt to the terminal for searching a corresponding multiplex frame and receiving an ESG data block quickly. Wherein:
the data type identifier marks the type of the ESG data table carried by an ESG data payload;
the data block identifier marks the data block that the ESG data payload belongs to, and together with the data type identifier determines a unique data block;
the data block version number denotes current version number of a data block, and is incremented by 1 each time the data block changes;
the ESG service identifier denotes an identifier of an ESG service, following a multiplex specification distribution regulation.

The unidirectional broadcast network S102 comprises a multiplexer interfaced with an ESG servicer, a unidirectional broadcast radio modulation transmission system and etc. Wherein:
the multiplexer receives three types of data including the ESG basic description table, ESG information table data and program prompt information that are transmitted from the ESG server S101. The interface between the multiplexer and the ESG server S101 adopts a TCP manner to communicate, where the ESG server S101 is taken as a TCP server, while the multiplexer is taken as a TCP client. After a TCP connection is established between the ESG server S101 and the multiplexer, by way of interface messages, the multiplexer sends a broadcast ESG request message to the ESG server S101 every one second and the ESG server S101 sends one or more response messages. The data type field of the response message sent by ESG server S101 indicates the basic description table data, the ESG information table data or the program prompt information. Interface message data are all transmitted in a big-endian format. The unidirectional broadcast network sends ESG data which comprises the ESG basic description table and the ESG data blocks to the terminal. The data block corresponds to all current issued ESG data information.

The mobile communication network S103 comprises a core network and access network system of a mobile communication network, and supports interactive functions like PS domain Hypertext Transfer Protocol (HTTP). Through the mobile communication network, the user terminal S104 sends an ESG data update request message to the ESG server S101; and then ESG server S101 returns a message which includes the required ESG data information to the user terminal S104,.

The user terminal S104 includes mobile terminals such as Personal Digital Assistant (PDA), a cell phone, an onboard mobile station, etc. Functions of the user terminal S104 includes:
receiving the broadcasted ESG data; analyzing the broadcasted ESG data; comparing the received basic description table data with that previously cached, and determining whether to request for ESG difference update data; requesting for ESG difference update data; receiving ESG difference update data; analyzing the ESG difference update data; updating local ESG data including basic description table information and ESG table data information.

The user terminal S104 analyzes information of the basic description table, which at least comprises one of the following parameters: data type identifiers, data block identifiers and version numbers thereof, so as to determine whether to initiate a request of updating the ESG data.

The difference update request message sent by the user terminal S104 describes current status of the user terminal at least comprises one of the following parameters: data type identifiers, data block identifiers and version numbers thereof.

The response message that the ESG server S101 returns to the terminal S104 at least comprises one of the following parameters: data type identifiers, the total number of data blocks, and data block description, the description of each data block comprises at least one of the following parameters: data block identifiers, version numbers of data blocks, and XML documents of ESG data information of one or more corresponding data blocks.

ESG basic description table information and all current issued ESG table data information are transmitted downward to the user terminal S104 through the unidirectional broadcast network by the ESG server S101 interfaced with the multiplexer. And when determining that update is needed, the user terminal S104 sends a Hypertext Transfer Protocol (HTTP) request to the ESG server S101 through the mobile communication network. The ESG server S101 processes this request, and returns ESG data information of difference update to the terminal S104 through the mobile communication network.

When the difference update data information returned to the user terminal is generated, according to the initial version number of the terminal reported in the difference update request sent by the user terminal S104, it is required to find the history version corresponding to this initial version number firstly, and then, by comparing current versions of data blocks of the ESG server S101 with the history versions, an update document is generated from the changed data blocks. The number of history versions reserved in the update document can be configured, e.g., 3 history versions prior to current version is reserved. The history version is the initial version of terminal update. As to the update document of the history version, it is the ESG server S101 that manages the data bock identifiers, the update document and the initial version number. The generation of the update document is to generate and reserve several data blocks based on several history versions that have changes in comparison of the above-mentioned several history versions with current version of the ESG data information, and the update document is taken as the response content of ESG data information difference update.

If the initial version number of the terminal is not in the history version list, the response content is a change based on a null set, which means that a universal set of the latest ESG data information corresponding to these data blocks is responded. For instance, if current version number of a certain data block is 13, three update documents of history versions 11, 12 and 10 in comparison with current version 13 are stored, but the initial version number reported by the terminal is 4, update documents corresponding to the history version cannot be found, so an update document generated from the current version 13 is adopted to update the terminal.

As shown in Fig. 2, it is a flowchart illustrating the service procedure of ESG difference update.
201: a multiplexer in a unidirectional broadcast network sends an ESG broadcast request to an ESG server.

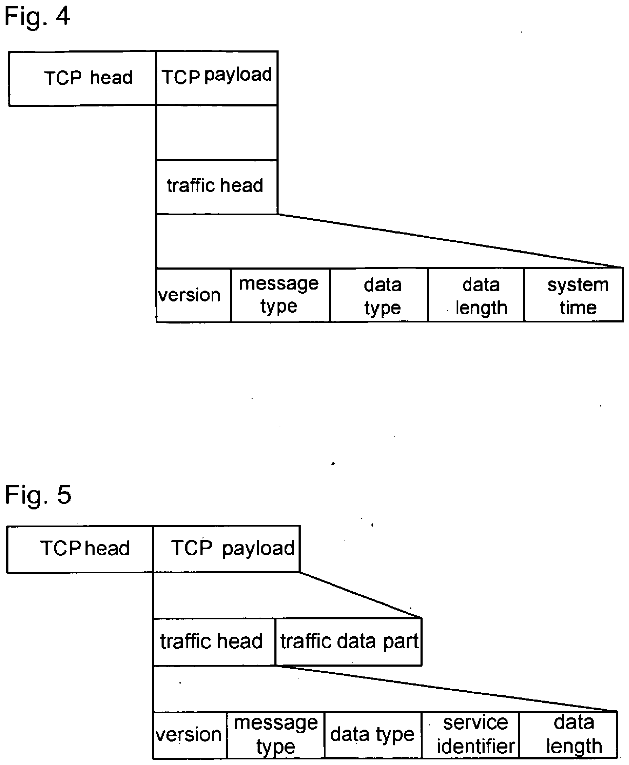

The data format of the request message sent to the ESG server by the multiplexer is as shown in Fig. 4.

202: Responding to the multiplexer request, ESG server sends ESG data.

The data format of the request message sent to the multiplexer by the ESG server is as shown in Fig. 5.

The content of a traffic data part (data payload) of the response message is regulated in above-mentioned data encapsulation manner of the ESG server.

The description of parameters in the messages in 201 and 202 is shown in table 1.

**Table 1 Parameter description of the interface between the ESG server and the multiplexer**

| Parameter | Length | Description |
|---|---|---|
| Version | 2 bytes | Message versions, 0x0000 is the version 1.0 |
| Message type | 2 bytes | 0x0000, a data request message sent by the multiplexer; 0x0001, a data response message sent by the ESG server; |
| | | others are reserved |
| Data type | 2 bytes | As to the data request message sent by the multiplexer, the value of this field is 0x0000, which denotes ESG data information; |
| | | as to the response message sent by the ESG server, this field means: |
| | | 0x0000-0x001F, the range of the ESG, wherein, as to an ESG basic description table, the value of this element is 0x0006; as to the ESG data information, the value of this element is 0x0000; as to program prompt information, the value of this element is 0x0001. |
| Service identifier | 2 bytes | This field does not exist as to the data request message sent by the multiplexer; |
| | | As to the response message sent by the ESG server, this field means: |
| | | as to the ESG basic description table, the value of this element is 0; as to the ESG data information, the value of this element is any one in the range of 0x0040-0x00FF; as to the program prompt information, this element is consistent with a service identifier of the service corresponding to the program prompt information. |
| Data length | 4 bytes | As to the data request message sent by the multiplexer, this field denotes the maximum length that local ESG data information can transmit in this second (the maximum length of ESG program prompt information and that of the ESG basic description table are not determined via this message); |
| | | As to the data response message sent by the ESG server, this filed denotes the number of bytes in the actual traffic data part. |
| System time | 8 bytes | As to the data request message sent by the multiplexer, this filed denotes time of the multiplexer, with 40 effective bits, wherein the first 16 bits denote an MJD date code, the last 24 bits are coded in a manner of 4-bit BCD, and a total of 6 numbers represent time accurate to a second. As to the data response message sent by the ESG server, this field does not exist. |
| Traffic data part | longer | As to the data request message sent by the multiplexer, this filed does not exist. |
| | | As to the data response message sent by the ESG server, this part is ESG data. |

203: the unidirectional broadcast network forwards the ESG data to a terminal.

204: the terminal receives and analyzes the ESG data.

The user terminal analyzes information in the received basic description table, compares the information with the local information cached previously in one or more aspects of: data type identifiers, data block identifiers and version numbers of data blocks, so as to determine whether to initiate a request of updating the ESG data. Usually, if the information is different in any of above aspects, it is considered that an ESG difference update request needs to be initiated, namely executing 205.

It should be noted that the terminal can determine whether to execute 205 or to receive all the ESG data broadcast information according to timing of receiving the ESG data broadcast information (e.g. booting, viewing, and browsing the ESG).

205: the terminal initiates an ESG data update request. This request message is as follows:

```
    POST <Request URI> HTTP/1.1
    Host:
    User-Agent:
    Content-Type:
   Content-Length:
    Date:
   Accept:
   <payload>
```

The description of parameters of the request message is shown in table 2.

**Table 2 Parameter description of the ESG difference update request message**

| Parameters | Description |
|---|---|
| Request URI | A URI of the ESG server and part of the request parameters. For example: /?requesttype=esg_retrieve&msisdn=13951803543 |
| Host | Domain name and port of the ESG server |
| User-Agent | Client information |
| Content-Type | Content type of <payload> message body |
| Content-Length | Byte length of <payload> message body |
| Date | Time and date of the request |
| Accept | Media type of the response message receivable to the terminal |
| <payload> | Message body of the request, including one or more elements of the user terminal: current data type identifier, data block identifier and XML document of data block version number information thereof. |

The request message <payload> describes current state of the user terminal, comprising at least one of the following parameters: data type identifiers, data block identifiers and version numbers of the data blocks.

206: A mobile communication network forwards the ESG data update request to the ESG server.

207: The ESG server prepares ESG difference update data according to the request from the user terminal.

A typical method of processing difference update data by the ESG server comprises managing ESG data information of one or more versions, and generating XML documents corresponding to the data type identifiers, the data block identifiers and the version numbers of the data blocks, which are to be sent for difference update response.

An example will be provided to illustrate specific application of the update method of the present invention.

Example 1: the ESG server has 2 data blocks at present, identified as block 1 and block 2, with version numbers 2 and 3 respectively. The system reserves 2 updated history versions, namely the system reserves the history version 1 and 2.

Previously, when the data block 2 is updated from version 2 to version 3, the ESG server should generate in time an XML document of ESG data information used for updating the data block 2 from version 2 to version 3, and this XML document is called an update document 1. This update document 1 is a document composed of those data blocks that are changed when comparing version 3 as the current version with version 2 as the history version.

If version numbers of data block 1 and data block 2 are 2 and 2 respectively before a terminal UE1 is updated, the ESG server returns the update document 1 based on the update request.

If another terminal UE2 requests to update ESG data information, the ESG server may return different response content to the UE2 because one or more elements among current data type, data block identifier and version number of the UE2 are partly different from those of the UE1.

For instance, the version number of the data block 2 of the UE2 is 1, the ESG server should generate in time an XML document of the ESG data information used for updating the data block 2 from version 1 to version 3, and this XML document is called an update document 2. This update document 2 is a document composed of those data blocks that are changed when comparing version 3 as the current version with version 1 as the history version.

208: the ESG server returns the ESG difference update data. The response message is as follows:

```
   HTTP/1.1 200 OK
   Server:
   Content-Type:
   Content-Length:
   Date:
   Expires:
   <payload>
```

Parameter description of the response message is shown in table 3.

**Table 3 Parameter description of the ESG difference update response message**

| Parameters | Description |
|---|---|
| Server | Server IP and port |
| Content-Type | Content type of <payload> message body |
| Content-Length | Byte length of <payload> message body |
| Date | Time and date of the response |
| Expires | Expired time of the response |
| <payload> | Message body of the response, comprising one or more elements of the user terminal: current data type identifier, data block identifier, version number and XML document of corresponding ESG data information. |

The response message <payload> comprises at least one of the following parameters: data type identifiers, the total number of data blocks and the data block description, each data block description comprises at least one of the following parameters: data block identifiers, version numbers of the data blocks, and XML documents of ESG data information of one or more corresponding data blocks.

209: the mobile communication network forwards the ESG difference update data to the user terminal.

210: the user terminal receives the ESG difference update data, and updates local ESG data including basic description table information and ESG table data information.

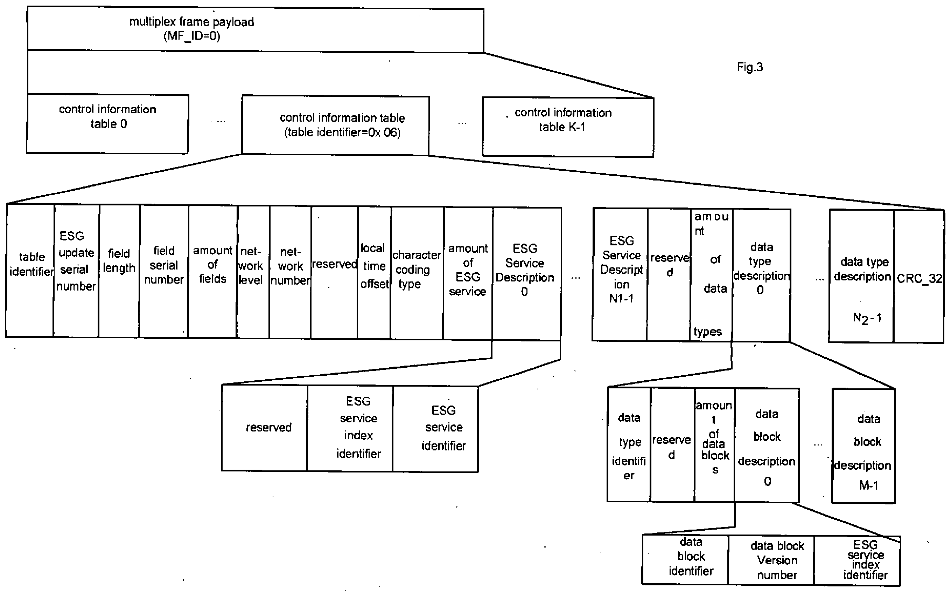

As shown in Fig. 3, the ESG basic description table is transmitted through a control multiplex frame.

The multiplex frame MF_ID==0 is used to carry control information (shortened as a service multiplex frame), and is transmitted through a control logical channel, one control information table here is taken as one multiplex subframe.

Namely the payload of the control multiplex frame is composed of several control information tables, in which the ESG basic description table is included. The table identifier is 0x06.

The description table comprises data type identifiers, data block identifiers and version numbers of data blocks of each ESG, which can be indexed to find the ESG service identifier used by the data block, and thus can prompt the terminal to find the corresponding multiplex frame and receive the ESG data fast.

The data type identifier, a 4-bit field, marks a type of an ESG data table carried by an ESG data payload, which is as shown in table 4.

**Table 4 ESG data type**

| Value (b3b2b1b0) | Type |
|---|---|
| 0000 | Reserved |
| 0001 | Service |
| 0010 | Service extension |
| 0011 | Lay out |
| 0100 | Content |
| 0101 | Service parameter |
| 0110~1111 | reserved |

The data block identifier, an 8-bit field, marks a data block that the ESG data payload belongs to, and determines a unique data block together with the data type identifier.

The version number of the data block, a 4-bit field, denotes current version number of the data block, and is incremented by 1 when the data block changes.

With reference to table 5, the ESG service identifier, a 16-bit field, denotes an identifier of an ESG service, and the distribution regulation follows the multiplex specification.

**Table 5 service identifier distribution**

| Service identifier value | Distribution |
|---|---|
| 0x0000 to 0x003F | Reserved |
| 0x0040 to 0x00FF | Continuous service, dedicated for ESG |
| 0x0100 to 0x01 FF | Reserved |
| 0x0200 to 0x3FFF | continuous service |
| 0x4000 to 0x7FFF | Short-term service |
| 0x8000 to 0xFFFF | Reserved |

Therefore, the ESG basic description table information and all the current issued ESG table data information are sent downward to the user terminal through the unidirectional broadcast network by the ESG server interfaced with the multiplexer.

When a user terminal needs updating, through the mobile communication network, the terminal sends an HTTP request to the ESG server. The ESG server processes this request, and returns ESG difference update data information to this terminal through the mobile communication network. Therefore, by adopting the unidirectional broadcast network of a mobile multimedia broadcast system, as well as the mobile communication network, the present invention effectively implements the method of ESG difference update.

The above description is just a preferable embodiment of the present invention, and not used to limit the present invention, to those skilled in the art, various modifications and changes can be made to the present invention. Therefore, any modification, equivalent substitute, improvement and update within the spirit and principle of the present invention shall be included in protection scope of the present invention.

## Claims

1. A method for difference update of an Electronic Service Guide, comprising the following steps:
(1) receiving, by an Electronic Service Guide, ESG server, from a user terminal an ESG difference update request message including current ESG data information of the user terminal;
(2) obtaining, by the ESG server, version numbers of data blocks to be updated of the user terminal according to the current ESG data information of the user terminal, comparing the version numbers of the data blocks to be updated with history version numbers of the ESG data information stored in the ESG server, and generating the difference update data for those data blocks corresponding to the changed history version numbers; and
(3) sending, by the ESG server, the difference update data to the user terminal to update local ESG data of the user terminal.

2. The method according to claim 1, wherein, in step (1), the user terminal sends the ESG difference update request message to the ESG server through a mobile communication network, correspondingly, in step (2), the ESG server sends the difference update data to the user terminal through the mobile communication network.

3. The method according to claim 1, wherein, the current ESG data information of the user terminal comprises: any piece of or combination of data type identifier information, data block identifier information and data block version number information.

4. The method according to claim 1, further comprising before step (1):
A: the user terminal comparing local cached ESG data information with ESG data information received from a broadcast network, if the local cached ESG data information is different from that received from the broadcast network, then determining that it is needed to initiate the ESG difference update request message; the local cached ESG data information is different from that received from the broadcast network in at least one aspect of data type identifier information, data block identifier information and data block version number information.

5. The method according to claim 1, wherein, in step (2), the ESG server returns the difference update data to the user terminal through an ESG difference response message, and the ESG difference response message includes any piece of or combination of data type identifier information, information of the total number of data blocks or data block description information.

6. The method according to claim 5, wherein, the data block description information is any piece of or combination of data block identifier information, data block version number information and the difference update data; the difference update data includes document information which comprises the ESG data information of one or more data blocks.

7. The method according to claim 1, wherein, if no version number of the history versions of the data information stored in the ESG server is corresponding to the version number of the data blocks to be updated, the ESG difference update data are generated from data information of current version of the ESG server.

8. The method according to claim 4, further comprising before the step A:
step A0: after receiving an ESG broadcast request from a unidirectional broadcast network, the ESG server returning a response message and ESG data information to the unidirectional broadcast network, and the unidirectional broadcast network forwarding the ESG data information to the user terminal.

9. A system for difference update of an Electronic Service Guide, comprising an Electronic Service Guide, ESG server (101), a unidirectional broadcast network (102) and a user terminal (104), and further comprising a mobile communication network (103), the mobile communication network (103) is used for receiving from the user terminal an ESG difference update request message including current ESG data information of the user terminal, forwarding the ESG difference update request message to the ESG server, and further forwarding ESG difference update data returned by the ESG server that meets the update request message to the user terminal;
the ESG server (101) is used for obtaining version numbers of data blocks to be updated of the user terminal according to the current ESG data information of the user terminal, comparing the version numbers of the data blocks to be updated with history version numbers of the ESG data information stored in the ESG server, generating the difference update data for those data blocks corresponding to the changed history version numbers, and sending, through an ESG difference response message, the difference update data to the user terminal to update local ESG data of the user terminal.

10. The system according to claim 9, wherein, the user terminal (104) is used for comparing local ESG data with received ESG data in aspects of data type identifier information, data block identifier information and data block version number information, if there is any aspect different, then the user terminal sends the ESG difference update request message to the ESG server, the ESG update request message includes any piece of or combination of data type identifier information, data block identifier information or data block version number information.

11. The system according to claim 9, wherein, the ESG difference response message includes any piece of or combination of data type identifier information, information of the total number of data blocks or data block description information, wherein the data block description information is any piece of or combination of data block identifier information, data block version number information and the difference update data.

## Patentansprüche

1. Verfahren zum Differenzupdate eines Electronic Service Guide, umfassend die folgenden Schritte:
(1) Empfangen einer ESG-Differenzupdate-Anforderungsnachricht, welche aktuelle ESG-Dateninformationen des Benutzer-Endgeräts enthält, von einem Benutzer-Endgerät durch einen Electronic Service Guide, ESG-Server;
(2) Erhalten von Versionsnummern von zu aktualisierenden Datenblöcken von dem Benutzer-Endgerät, entsprechend den aktuellen ESG-Dateninformationen des Benutzer-Endgeräts, durch den ESG-Server, Vergleichen der Versionsnummern der zu aktualisierenden Datenblöcke mit Verlauf-Versionsnummern der ESG-Dateninformationen, die im ESG-Server gespeichert sind, und Erzeugen der Differenzupdate-Daten für die Datenblöcke, die den geänderten Verlauf-Versionsnummern entsprechen; und
(3) Senden der Differenzupdate-Daten an das Benutzer-Endgerät durch den ESG-Server, um lokale ESG-Daten des Benutzer-Endgeräts zu aktualisieren.

2. Verfahren nach Anspruch 1, wobei in Schritt (1) das Benutzer-Endgerät die ESG-Differenzupdate-Anforderungsnachricht an den ESG-Server durch ein mobiles Kommunikationsnetzwerk sendet, entsprechend, in Schritt (2), der ESG-Server die Differenzupdate-Daten an das Benutzer-Endgerät durch das mobile Kommunikationsnetzwerk sendet.

3. Verfahren nach Anspruch 1, wobei die aktuellen ESG-Dateninformationen des Benutzer-Endgeräts umfassen: irgend ein Stück von oder eine Kombination aus Datentyp-Identifizierer-Informationen, Datenblock-Identifizierer-Informationen und Datenblock-Versionsnummer-Informationen.

4. Verfahren nach Anspruch 1, weiter umfassend vor Schritt (1):
A: das Benutzer-Endgerät vergleicht lokal zwischengespeicherte ESG-Dateninformationen mit von einem Sendenetzwerk empfangenen ESG-Dateninformationen, falls die lokal zwischengespeicherten ESG-Dateninformationen sich von denen, die von dem Sendenetzwerk empfangen wurden, unterscheiden, dann stellt es fest, dass es die ESG-Differenzupdate-Anforderungsnachricht auslösen muss; die lokal zwischengespeicherten ESG-Dateninformationen unterscheiden sich von denen, die von dem Sendenetzwerk empfangen wurden, in wenigstens einem Aspekt von Datentyp-Identifizierer-Informationen, Datenblock-Identifizierer-Informationen und Datenblock-Versionsnummer-Informationen.

5. Verfahren nach Anspruch 1, wobei in Schritt (2), der ESG-Server die Differenzupdate-Daten an das Benutzer-Endgerät durch eine ESG-Differenz-Antwortnachricht zurückgibt, und die ESG-Differenz-Antwortnachricht irgend ein Stück von oder eine Kombination aus Datentyp-Identifizierer-Informationen, Informationen über die Gesamtanzahl der Datenblöcke oder Datenblock-Beschreibungsinformationen enthält.

6. Verfahren nach Anspruch 5, wobei die Datenblock-Beschreibungsinformationen irgend ein Stück von oder eine Kombination aus Datenblock-Identifizierer-Informationen, Datenblock-Versionsnummer-Informationen, und den Differenzupdate-Daten sind; die Differenzupdate-Daten enthalten Dokument-Informationen, welche die ESG-Daten-Informationen eines oder mehrerer Datenblöcke enthalten.

7. Verfahren nach Anspruch 1, wobei, falls keine Versionsnummer der Verlaufsversionen der Daten-Informationen, die im ESG-Server gespeichert sind, der Versionsnummer der zu aktualisierenden Datenblöcke entspricht, die ESG-Differenzupdate-Daten aus Dateninformationen einer aktuellen Version des ESG-Servers erzeugt werden.

8. Verfahren nach Anspruch 4, weiterhin umfassend vor Schritt A:
Schritt A0: nach dem Empfangen einer ESG-Sendeanfrage von einem unidirektionalen Sendenetzwerk, gibt der ESG-Server eine Antwortnachricht und ESG-Dateninformationen an das unidirektionale Sendenetzwerk zurück, und das unidirektionale Sendenetzwerk leitet die ESG-Dateninformationen an das Benutzer-Endgerät weiter.

9. System zum Differenzupdate eines Electronic Service Guide, umfassend einen Electronic Service Guide, ESG-Server (101), ein unidirektionales Sendenetzwerk (102) und ein Benutzer-Endgerät (104), und weiterhin umfassend ein mobiles Kommunikationsnetzwerk (103), das mobile Kommunikationsnetzwerk (103) wird genutzt, um vom Benutzer-Endgerät eine ESG-Differenzupdate-Anforderungsnachricht zu empfangen, die aktuelle ESG-Dateninformationen des Benutzer-Endgeräts enthält, die ESG-Differenzupdate-Anforderungsnachricht an den ESG-Server weiterzuleiten, und des Weiteren ESG-Differenzupdate-Daten, die vom ESG-Server zurückgegeben werden und die der Update-Anforderungsnachricht entsprechen, an das Benutzer-Endgerät weiterzuleiten;
der ESG-Server (101) wird genutzt, um Versionsnummern von zu aktualisierenden Datenblöcken des Benutzer-Endgeräts zu erhalten, entsprechend den aktuellen ESG-Dateninformationen des Benutzer-Endgeräts, die Versionsnummern der zu aktualisierenden Datenblöcke mit Verlauf-Versionsnummern der ESG-Dateninformationen zu vergleichen, die im ESG-Server gespeichert sind, die Differenzupdate-Daten für die Datenblöcke zu erzeugen, die den geänderten Verlauf-Versionsnummern entsprechen, und durch eine ESG-Differenz-Antwortnachricht die Differenzupdate-Daten an das Benutzer-Endgerät zu senden, um lokale ESG-Daten des Benutzer-Endgeräts zu aktualisieren.

10. System nach Anspruch 9, wobei das Benutzer-Endgerät (104) genutzt wird, um lokale ESG-Daten mit empfangenen ESG-Daten zu vergleichen im Hinblick auf Datentyp-Identifizierer-Informationen, Datenblock-Identifizierer-Informationen und Datenblock-Versionsnummer-Informationen, falls sich irgendein Aspekt unterscheidet, dann sendet das Benutzer-Endgerät die ESG-Differenzupdate-Anforderungsnachricht an den ESG-Server, die ESG-Update-Anforderungsnachricht enthält irgend ein Stück von oder eine Kombination aus Datentyp-Identifizierer-Informationen, Datenblock-Identifizierer-Informationen oder Datenblock-Versionsnummer-Informationen.

11. System nach Anspruch 9, wobei die ESG-Differenz-Antwortnachricht irgend ein Stück von oder eine Kombination aus Datentyp-Identifizierer-Informationen, Informationen über die gesamte Anzahl von Datenblöcken oder Datenblock-Beschreibungsinformationen enthält, wobei die Datenblock-Beschreibungsinformationen irgend ein Stück von oder eine Kombination aus Datenblock-Identifizierer-Informationen, Datenblock-Versionsnummer-Informationen und den Differenzupdate-Daten ist.

## Revendications

1. Un procédé pour actualiser les différences d'un guide électronique des services, comportant les étapes suivantes :
(1) La réception par un guide électronique des services, serveur ESG, à partir du terminal d'un utilisateur d'une requête d'actualisation de différences incluant les données ESG actuelles du terminal de l'utilisateur,
(2) L'obtention par le serveur ESG, des numéros de version des blocs de données à actualiser du terminal de l'utilisateur conformément aux données ESG actuelles du terminal de l'utilisateur, la comparaison des numéros de versions des blocs de données à actualiser avec l'historique des numéros de version des données ESG stockées sur le serveur ESG, et la génération des données d'actualisation de différences pour ces blocs de données correspondant aux numéros de version modifiés dans l'historique, et,
(3) L'envoi par le serveur ESG des données d'actualisation de différences au terminal de l'utilisateur pour actualiser les données ESG locales du terminal de l'utilisateur.

2. Le procédé selon la revendication 1, dans lequel dans l'étape (1) le terminal de l'utilisateur envoie la requête d'actualisation de différences au serveur ESG au moyen d'un réseau de communication mobile, et en correspondance, dans l'étape (2), le serveur ESG envoie les données d'actualisation de différences au terminal de l'utilisateur au moyen du réseau de communication mobile.

3. Le procédé selon la revendication 1, dans lequel les données ESG actuelles du terminal de l'utilisateur comportent des parties ou combinaisons d'identifiants de types de données, des identifiants de blocs de données et des informations de numéros de version de blocs de données.

4. Le procédé selon la revendication 1, comportant par ailleurs avant l'étape (1) : A : La comparaison par le terminal de l'utilisateur des données ESG locales du cache avec les données ESG reçues d'un réseau de diffusion, puis, si les données ESG locales du cache sont différentes de celles reçues du réseau de diffusion, la détermination qu'il est nécessaire d'initier une requête d'actualisation de différences ; les données ESG locales du cache sont différentes de celles reçues du réseau de diffusion en au moins un aspect des identifiants de types de données, des identifiants de blocs de données et des informations de numéros de version de blocs de données.

5. Le procédé selon la revendication 1, dans lequel, dans l'étape (2), le serveur ESG renvoie les données d'actualisation de différences au terminal de l'utilisateur au moyen d'une réponse de différences ESG, et la réponse de différences ESG comporte des parties ou combinaisons d'identifiants de types de données, des identifiants de blocs de données et des informations de numéros de version de blocs de données.

6. Procédé selon la revendication 5, dans lequel les informations de description des blocs de données consistent en des parties ou combinaisons d'identifiants de blocs de données, des informations de numéros de version de blocs de données et les données d'actualisation de différences ; les données d'actualisation de différences incluant des documents qui comportent les données ESG d'un ou plusieurs blocs de données.

7. Le procédé selon la revendication 1, dans lequel, si aucun numéro de version des versions historiques des données stockées sur le serveur ESG ne correspond au numéro de version des blocs de données à actualiser, les données d'actualisation de différences ESG sont générées à partir des données de la version actuelle du serveur ESG.

8. Le procédé selon la revendication 4, comportant par ailleurs avant l'étape A :
Une étape A0 : après réception d'une requête de diffusion ESG à partir d'un réseau de diffusion unidirectionnel, le serveur ESG renvoie une réponse et les données ESG au réseau de diffusion unidirectionnel, et le réseau de diffusion unidirectionnel transmet les données ESG au terminal de l'utilisateur.

9. Un dispositif pour actualiser les différences d'un guide électronique des services comportant un guide électronique des services, un serveur ESG (101), un réseau de diffusion unidirectionnel (102) et un terminal d'utilisateur (104), et comportant par ailleurs un réseau de communication mobile (103), le réseau de communication mobile (103) étant utilisé pour recevoir du terminal de l'utilisateur une requête d'actualisation de différences ESG incluant les données ESG locales du terminal de l'utilisateur, la transmission de la requête d'actualisation de différences ESG au serveur ESG, et ensuite la transmission au terminal de l'utilisateur des données d'actualisation de différences ESG renvoyées par le serveur ESG correspondant à la requête d'actualisation ;
le serveur ESG (101) est utilisé pour obtenir les numéros de version des blocs de données à actualiser sur le terminal de l'utilisateur en fonction des données ESG actuelles du terminal de l'utilisateur, comparer les numéros de versions des blocs de données à actualiser avec l'historique des numéros de version des données ESG stockées sur le serveur ESG, générer les données d'actualisation de différences pour ces blocs de données correspondant aux numéros de version modifiés dans l'historique, et envoyer au moyen d'une réponse de différences ESG les données d'actualisation de différences au terminal de l'utilisateur pour actualiser les données ESG locale du terminal de l'utilisateur.

10. Le dispositif selon la revendication 9, dans lequel, le terminal d'utilisateur (104) est utilisé pour comparer les données ESG locales avec les données ESG reçues par rapport aux identifiants de types de données, aux identifiants de blocs de données et aux informations de numéros de version de blocs de données, si il y a une différence, alors le terminal d'utilisateur envoie la requête d'actualisation de différences ESG au serveur ESG, la requête d'actualisation de différences ESG incluant des parties ou combinaisons d'identifiants de types de données, des identifiants de blocs de données et des informations de numéros de version de blocs de données.

11. Le dispositif selon la revendication 9, dans lequel, la requête d'actualisation de différences ESG comporte des parties ou combinaisons d'identifiants de types de données, des informations sur le nombre total de blocs de données ou la description des blocs de données, dans lequel la description des blocs de données consiste en des parties ou combinaisons d'identifiants de blocs de données, des informations de numéros de version de blocs de données et les données d'actualisation de différences.
